# EUROPEAN PATENT SPECIFICATION

(11) **EP 4 570 350 B1**
(45) Date of publication and mention of the grant of the patent: **19.08.2026**
(21) Application number: 24219996.6
(22) Date of filing: 13.12.2024
(51) Int. Cl.: B01D 45/12, F01D 25/18

(54) **AIR-OIL SEPARATOR**
LUFT-ÖL-SEPARATOR
SÉPARATEUR AIR-HUILE

(30) Priority: 14.12.2023 US 202318539485
(43) Date of publication of application: 18.06.2025
(73) Proprietor: PRATT & WHITNEY CANADA CORP., Longueuil, Québec J4G 1A1 (CA)
(72) Inventor: THIVIERGE, Patrick, (01BE5) Longueuil, J4G 1A1 (CA); DOMINGO, Ritchie, (01BE5) Longueuil, J4G 1A1 (CA)
(74) Representative: Dehns

(56) References cited:
- US-A1- 2019 308 129
- US-B1- 6 398 833
- US-B2- 10 870 079

## Description

### TECHNICAL FIELD

The application relates generally to air-oil separators for separating air from oil of an air-oil mixture.

### BACKGROUND OF THE ART

Aircraft engines, such as gas turbine engines, typically have air-oil separators for removing air from oil. Various types and configurations of air-oil separators are known in the art. While these known systems have various benefits, there is still room in the art for improvement.

US 2019/308129 A1 relates to an air-oil separator with two flow paths.

US 6398833 B1 relates to an apparatus for separating a liquid in suspension, and more particularly to an apparatus for air/oil separation especially but not exclusively for use in gas turbine engine oil systems.

### SUMMARY

According to one aspect of the invention, there is provided a gearbox de-oiler for an aircraft engine as claimed in claim 1.

Some embodiments of the invention are as claimed in the dependent claims.

### DESCRIPTION OF THE DRAWINGS

Reference is now made to the accompanying figures in which:
Fig. 1 is a schematic cross section view of an aero-engine having an air-oil separator mounted in an accessory gearbox (AGB);
Fig. 2 is a schematic isometric view of the air-oil separator;
Fig. 3 is a schematic cross-section view of the air-oil separator; and
Fig. 4 is a cross-section view taken along line 4-4 in Fig. 3.

### DETAILED DESCRIPTION

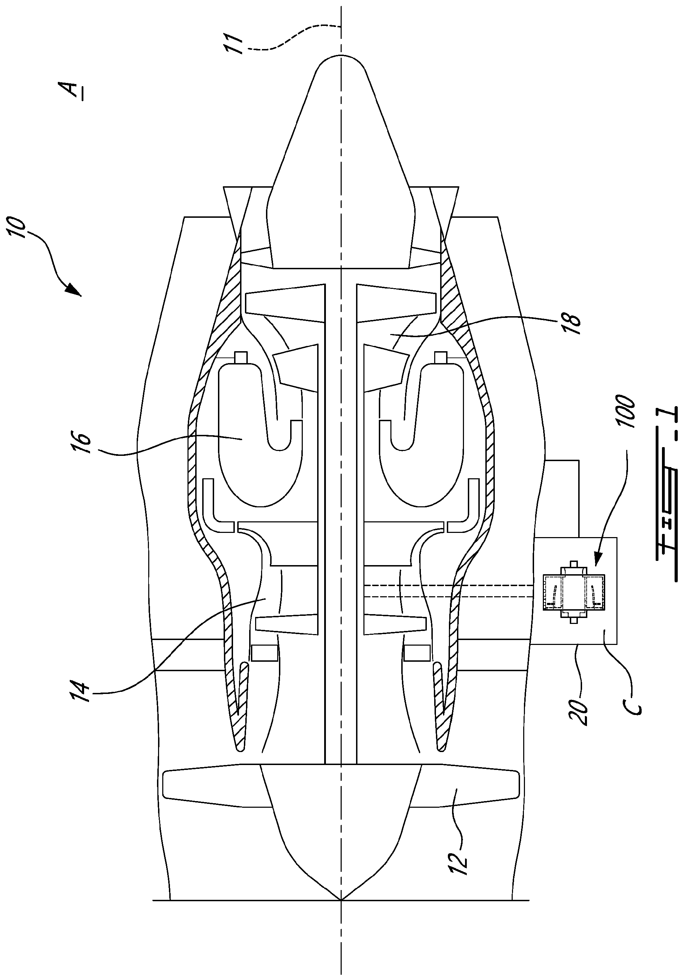

Fig. 1 illustrates a gas turbine engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. The engine 10 further comprises an accessory gearbox 20 drivingly connected to the turbine section 18. Bearings (not shown) are provided for supporting engine rotary components, such as the compressor and turbine shafts for rotation about the engine centerline 11. A lubrication system (not shown) provides lubricant (e.g., oil) to various engine components, such as the bearings and gears. It shall be understood that the aircraft engine illustrated in Fig. 1 is presented by way of example only and the teachings herein can have other applications.

As known in the art, pressurized air, for instance compressor bleed air, may be used to seal the bearing and gearbox cavities. As the air flows through the seals (not shown) of the bearing and gearbox cavities, a certain amount of oil naturally becomes entrained with the air and it is desirable that this oil be separated from the air before the air is vented to the environment.

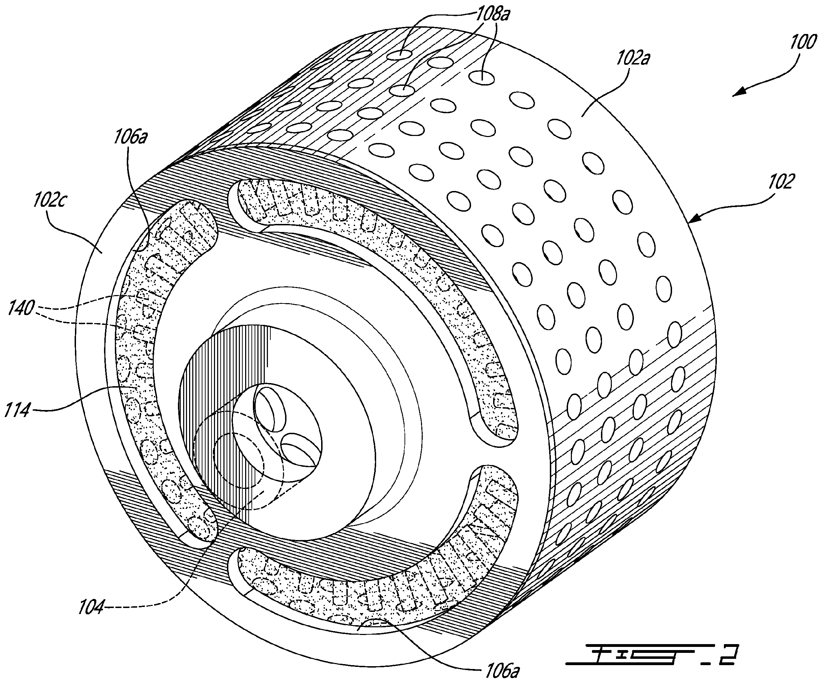

Figs. 2-4 illustrate an air-oil separator 100, also known as a breather or de-oiler, that can be integrated to the engine lubrication system to separate the air from the oil. In this way, retrieved liquid oil can be reused for lubrication and clean air can be expelled to the environment. The air-oil separator thus helps reduce oil consumption, lower emissions, and increase oil recovery. Reducing the amount of oil released in the atmosphere resulting of aircraft engine operation is beneficial for the environment. The air-oil separator also increases the engine autonomy with a reduced oil consumption. Reducing the oil consumption reduces the maintenance intervention required to replenish the oil tank and cost associated with the engine operation which is economically beneficial.

The exemplified air-oil separator 100 is particularly suited for use as a gearbox de-oiler. For instance, the air-oil separator 100 can be integrated to the AGB 20 shown in Fig. 1. According to some embodiments, the air-oil separator 100 may be mounted inside a chamber C of the AGB 20. As will be seen hereinafter, the air-oil separator 100 may be provided in the form of a rotating filter component configured to use the centrifugal action to achieve oil and air separation while the air-oil mixture is forced through a flow path that is more difficult for the oil to navigate than the air. Because liquid oil is heavier than air, it gets separated out and centrifugal forces help drive the oil toward the outside of the separator 100 where it can be expelled. The clean air is then able to vent through an air passage and out to the environment.

Referring now more specifically to Figs. 2-4, it can be seen that the air-oil separator 100 comprises a housing 102 mounted to a hollow rotating shaft 104 inside the chamber C of the AGB 20 for rotation with the shaft 104 about a central axis. The housing 102 includes an outer circumferential wall 102a and an inner circumferential wall 102b concentrically disposed about the central axis and extending axially from a first annular end wall 102c to a second annular end wall 102d. The outer and inner circumferential walls 102a, 102b and the first and second end walls 102c, 102d define therebetween an annular chamber 102e around the hollow rotating shaft 104. The chamber 102e has an air-oil mixture inlet 106 defined in the first end wall 102c, an oil outlet 108 defined in the outer circumferential wall 102a, and an air outlet 110 defined in the inner circumferential wall 102b. As best shown in Fig. 2, the air-oil mixture inlet 106 may include a number of circumferentially spaced-apart axial inlet holes or slots 106a. According to the illustrated embodiment, the air-oil mixture inlet 106 comprises a circumferential row of three arcuate inlet slots 106a defined in the first end wall 102c between the radially outer and radially inner circumferential walls 102a, 102b. The person skilled in the art will understand that the number and size of the inlet slots 106a may vary depending on the engine operating parameters, such as the pressure available for driving the fluid flow through the air-oil separator 100. Still according to the illustrated embodiment, the arcuate inlet slots 106a are provided in the radially outer half of the first end wall 102c relative to the central axis of the separator 100. Referring to Figs. 2-4, it can be seen that the oil outlet 108 may comprise a plurality of radial oil exit holes 108a defined in the outer circumferential wall 102a of the housing 102. The oil exit holes 108a may be distributed over the whole surface of the outer circumferential wall 102a axially between the first and second end walls 102c, 102d and circumferentially around a full outer circumference of the housing 102. The air outlet 110 may comprise a circumferential row of radial air exit holes 110a in flow communications with one or more corresponding radial aperture(s) 112 defined in the hollow rotating shaft 104. In this way, filtered air may be evacuated centrally through the hollow rotating shaft 104. According to the illustrated embodiment, the air exit holes 110a are defined in the inner circumferential wall 102b axially adjacent or next to the first end wall 102c. As will be seen hereinafter, the axial positioning of the air exit holes 110a may be used in combination with other features of the separator to increase the effective flow length of the separator 100.

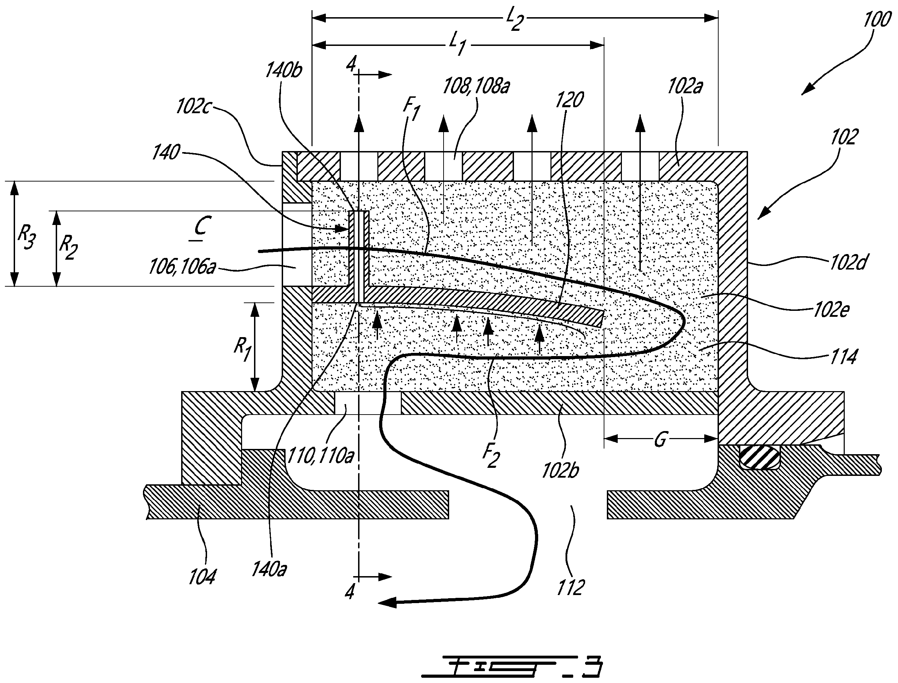

As best shown in Fig. 3, the annular chamber 102e of the housing 102 is filled with a porous separator matrix 114 configured to act as a coagulator. The porous separator matrix 114 may be provided in the form of a sponge or a mesh material, defining a plurality of intricate micro passages that are in fluid communication with one another. For instance, the separator matrix 114 may include a metal foam material, in which there is a continuous three-dimensional porous structure. Metal foam materials have many useful features such as lighter weight, higher porosity, and larger surface-to-volume ratio.

The separator matrix 114 may be formed into an annular cylindrical body configured to entirely fill the annular chamber 102e around the hollow rotating shaft 104. The separator matrix 114 rotates jointly with the housing 102 and the shaft 104 inside the chamber C of the AGB 20. By flowing through the separator matrix 114, the oil in the air-oil mixture coalesce against the material of the separator matrix 114. Via the centrifugal force, the coalesced oil droplets merge radially away from the rotation axis, toward the outer circumferential wall 102a of the housing 102 where the oil droplets are discharged back into the chamber C of the AGB 20 via the oil exit holes 108a. Simultaneously, the air continues to flow toward a lower pressure zone downstream of the AGB 20 through the air exit holes 110a and the aperture(s) 112 located on the hollow rotating shaft 104. The air, with any residual oil, is thus vented through the air outlet 110 and the center of the hollow rotating shaft 104.

It can be appreciated that the oil content of the air-oil mixture decreases along its passage through the separator matrix 114. The efficiency (i.e., the ability to remove oil from the air-oil mixture) of the air-oil separator 100 is influenced by: 1) the rotational speed of the separator; 2) the metal foam sponge density and 3) the effective flow length. The effective flow length may be defined as the mean distance from the air-oil mixture inlet 106 to the air outlet 110. That is the distance travelled by the air-oil mixture through the separator matrix 114 between inlet 106 an outlet 110.

Accordingly, for a same metal foam sponge density and a same rotational speed, the efficiency of the air-oil separator 100 may be improved by increasing the effective flow length. Indeed, the longer the flow path is, the more efficient the separator can be. However, because of space constrains, there is often a need to minimize the overall axial and radial envelope of the air-oil separator. As will be seen hereinafter, according to at least some embodiments, the effective flow length of the air-oil separator 100 may be increased by creating serially interconnected flow paths within the separator matrix 114 and that without increasing the overall size of the separator. In this way, compact air-oil separators may be provided with greater effective flow length.

For instance, as best shown in Fig. 3, a separation plate 120 may be provided in the chamber 102e of the housing 102 to divide the chamber 102e and, thus, the separator matrix 114 into a radially outer flow path segment F1 (also herein referred to as a primary flow path segment) and a radially inner flow path segment F2 (also herein referred to as a secondary flow path segment). The separation plate 120 may be provided in the form of an annular or circumferential plate embedded in the separator matrix 114 and extending axially from the first end wall 102c toward the second end wall 102d of the housing 102 at a radial location radially inward from the air-oil mixture inlet 106. As shown in Fig. 3, an axial length L1 of the separation plate 120 may be less than an axial length L2 of the chamber 102e to create an axial gap G between the distal end of the separation plate 120 and the second end wall 102d of the chamber 102e. The axial gap G forms a radial passage fluidly connecting the radially outer flow path segment F1 to the radially inner flow path segment F2. In this way, the air-oil mixture can flow from the air-oil mixture inlet 106 through the radially outer or primary flow path segment F1 toward the second end wall 102d of the housing 102 and then pass radially inwardly to the radially inner or secondary flow path segment F2 where the air and any residual oil can flow in an opposite axial direction toward the first end wall 102c in order to enable further air-oil separation before the filtered air is discharged through the air outlet 110 at the very end of the radially inner or secondary flow path segment F2. Creating such a secondary flow path segment F2 significantly increases the effective flow length of the separator, thereby providing greater potential for the oil to coagulate.

It is understood that the axial length of the gap G and, thus, the axial length L1 of the separation plate 120 relative to the axial length L2 of the chamber 102e may vary from engine to engine, notably depending upon the pressure differential between the air-oil mixture inlet 106 and the air outlet 110. According to some embodiments, the separation plate 120 could also extend fully across the chamber 102e to the second end wall 102d (i.e., L1 = L2) and radial holes could be defined in the separation plate 120 at an axial location adjacent or next to the second end wall 102d of the housing 102 to provide a fluid passage between the primary and secondary flow paths F1, F2.

As can be appreciated from Fig. 3, the axial length of the secondary flow path segment F2 can be adjusted by changing the relative axial positioning of the axial gap G (i.e., the radial interconnecting passage between the primary and secondary flow path segments F1, F2) and the air outlet 110. Indeed, by positioning the radial interconnecting passage and the air outlet 110 at the opposed axial ends of the chamber 102e, the flow path length of the secondary flow path segment F2 can be maximized. However, it is understood that depending on the engine and the pressure drop across the separator 100, the axial length of the secondary flow path segment F2 can be reduced by positioning the air outlet 110 and/or the radial interconnecting passage further away from the first and second end walls 102c, 102d, respectively.

According to the embodiment illustrated in Fig. 3, the separation plate 120 is radially disposed at a distance R1 from the inner circumferential wall 102b of the chamber 102e so that the radially outer surface of the separation plate 120 at an axial location adjacent the first end wall 102c is substantially flush/leveled with the radially inner end of the air-oil mixture inlet 106. However, it is understood that the radial distance R1 could be less. In other words, the separation plate 120 could be disposed further radially inwardly from the air-oil mixture inlet 106. In this way, the relative radial height of the primary and secondary flow paths F1 and F2 could be varied as needed.

In addition to creating the secondary flow path segment F2, the separation plate 120 also acts as an oil collector. Indeed, the radially inner surface of the separation plate 120 provides a surface to collect the oil droplets that are coalesced in the secondary flow path segment F2 and flow radially outwards under the centrifugal effect. The plate 120 may be configured to promote oil flow towards the first end wall 102c to collect the oil through a set of oil collector tubes 140. As shown in Fig. 3, the separation plate 120 has a radially inner diameter that increases from a minimum value to a maximum value towards the first end wall 102c. This encourages collected oil along the radially inner surface of the plate 120 to travel toward the first end wall 102c where the oil collector tubes 140 are located. According to the illustrated embodiment, the oil collector tubes 140 are disposed where the radially inner diameter of the separator plate 120 is at its maximum. Still according to the illustrated embodiment, this axial location is adjacent to the first end wall 102c at the downstream end of the secondary flow path segment F2. By so positioning the oil collector tubes 140 and configuring the plate 120 to guide de centrifuged oil to the downstream end of the second flow path segment F2, additional opportunities to extract oil from the air-oil mixture can be obtained.

Still referring to Fig. 3, the separation plate 120 may curve radially inwardly in an axial direction away from the first end wall 102c. This can be used to provide the inner diameter variation to guide the centrifuged oil droplets in the desired axial direction along the radially inner surface of the separation plate 120, while allowing the adjustment of the cross-section profile of the primary and secondary flow path segments F1, F2. For instance, according to the illustrated embodiment, the radial height of the primary flow path segment F1 gradually increases in an axial direction away from the first end wall 102c, whereas the radial height of the secondary flow path segment F2 increases towards the first end wall 102c. This may be used to adjust the pressure delta in the different flow path segments. According to another possible configuration, the annular separation plate 120 could have a frusto-conical profile instead of being curved as shown in Fig. 3.

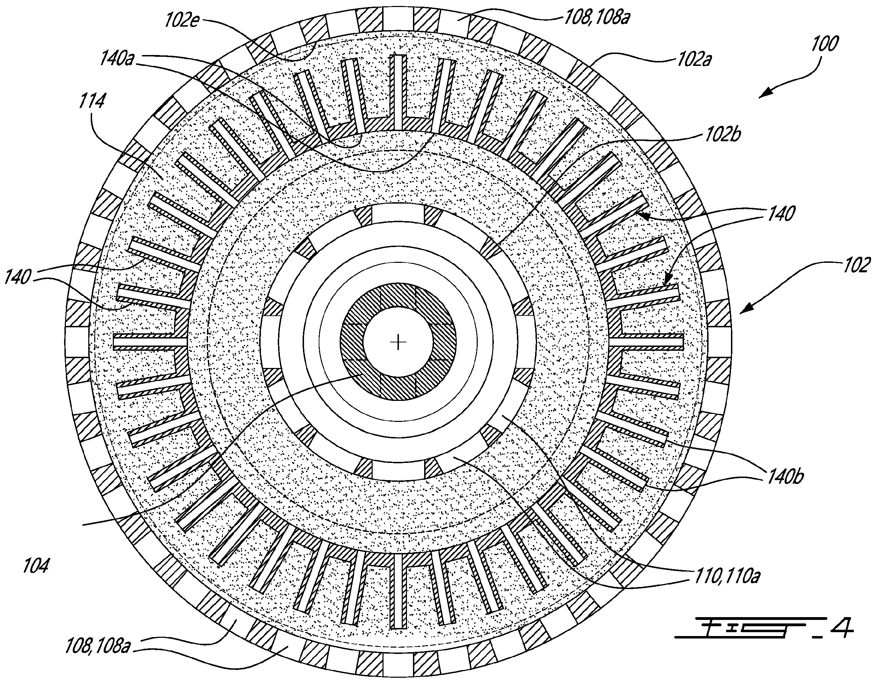

The purpose of the oil collector tubes 140 is to collect coagulated oil from the secondary flow path segment F2 and to direct it to the oil exit holes 108a in the outer circumferential wall 102a of the housing 102. If only exit holes were incorporated in the plate 120, there is a risk of some recirculation of the oil along the primary and secondary flow path segments F1, F2. The oil collector tubes 140 reduces the risk of oil recirculation and further maximizes the efficiency of the air-oil separator 100. Referring to Figs. 3 and 4, it can be appreciated that the oil collector tubes 140 may include a circumferential row/array of tubes projecting radially outwardly from the separation plate 120. According to the illustrated embodiment, only one circumferential row is provided. However, it is understood that more than one row could be provided axially along the separation plate 120. Also, the distribution of the tubes 140 around the separation plate 120 can differ from the illustrated example. For instance, the oil collector tubes 140 could be angularly offset relative to the air-oil mixture inlet slots 106a and the number of tubes and the disposition thereof around the separation plate 120 can vary from engine to engine.

Each oil collector tubes 140 has an inlet 140a defined in the radially inner surface of the separation plate 120 for collecting coagulated oil centrifuged against the radially inner surface of the separation plate 120 and an outlet 140b for directing the collected oil to the oil exit holes 108a in the primary flow path segment F1. According to the illustrated embodiment, the oil collector tubes 140 are embedded in the separator matrix 114 and have a radial height R2 which is less than the radial height R3 of the primary flow path segment F1 at the axial location of the oil collector tubes 140. That is the tubes 140 do not extend all the way to the oil exit holes 108a, but are rather spaced by a predetermined distance from the inner surface of the outer circumferential wall 102a). The oil collected from the secondary flow path F2 is thus discharged from the tubes 140 into the separator matrix 114, but close (i.e., in the radially outer half of the primary flow path segment F1) to the radial oil exit holes 108a to minimize the risk of recirculation. However, it is understood that the collector tubes 140 could extend all the way to the oil exit holes 108a such that collected oil from the secondary path segment F2 is not returned to the separator matrix 114, thereby eliminating any potential recirculation of oil through both the primary and secondary flow paths F1, F2.

The collector tubes 140 may be clocked or aligned with the oil exit holes 108a defined in the outer circumferential wall 102a of the housing 102 of the separator 100. This may provide more direct passage of the oil from the collector tubes 140 to the oil exit holes 108a. From the foregoing, it can be appreciated that numerous parameters of the tubes, such as the number of tubes, the inner diameter of the tubes, the length of the tubes, the position and distribution of the tubes, can be varied to optimize efficiency.

It is understood that more than one set of separation plate and associated oil collector tubes could be provided in the chamber 102e to extend the effective flow length of the air-oil separator 100. The plates and their respective sets of tubes could be axially staggered to define a serpentine passage through the separator matrix 114. For instance, a second plate could extend axially from the second end wall 102d at a radial location spaced radially inwardly from the first plate to create a third flow path segment leading to the air outlet 110. Various configurations are contemplated. Also, the separator plate and the associated oil collector tubes could be retrofitted to an existing air-oil separator.

In operation, the air-oil mixture flowing into the air-oil separator 100 via the inlet 106 is pressed into the porous separator matrix 114. As the mixture axially flows along the primary flow path segment F1, a first portion of the oil contained in the mixture is captured by the framework of the matrix 114 and discharged through the oil exits holes 108a by the centrifugal force. The air and residual oil flow through the secondary flow path segment F2, where a further portion of the oil is coagulated in the separator matrix 114 and centrifuged against the radially inner surface of the separation plate 120. The coagulated oil flows axially along the radially inner surface of the plate 120 towards the oil collector tubes 140. From the tubes 140, the additional oil collected from the secondary flow path segment F2 is discharged into the separator matrix 114 at a radial location close to the oil exit holes 10. The centrifugal force causes the oil discharged from the tubes 140 to flow from the separator matrix 114 to the oil exit holes 108a before being discharged from the separator 100. The de-oiled air flows to the downstream end of the secondary flow path F2 where it is vented via the air outlet 110 and the center of the shaft 104.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the following description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

The embodiments described in this document provide non-limiting examples of possible implementations of the present technology. For example, while the air-oil separator has been described as part of an AGB, it is understood that it could be integrated to another gearbox or oil chamber of an engine. Also, while the engine has been shown as a turbofan engine, it is understood that the air-oil separator could be used on different types of engines, including a turboshaft engine, a turboprop engine, and an auxiliary power engine to name a few.

## Claims

1. An air-oil separator (100) for an aircraft engine (10), the air-oil separator (100) comprising:
a housing (102) rotatable about a central axis, the housing (102) having an outer and an inner circumferential wall (102a, 102b) extending axially from a first end wall (102c) to a second end wall (102d), the outer and inner circumferential walls (102a, 102b) and the first and second end walls (102c, 102d) defining an annular chamber (102e) around the central axis, the annular chamber (102e) having an inlet (106) defined in the first end wall (102c) for receiving an air-oil mixture, and an oil outlet (108) defined in the outer circumferential wall (102a);
an annular separation plate (120) projecting axially from the first end wall (102c) towards the second end wall (102d) inside the annular chamber (102e) radially inwardly from the inlet (106) relative to the central axis, the annular separation plate (120) dividing the annular chamber (102e) into a radially outer flow path segment (F1) and a radially inner flow path segment (F2), the radially inner flow path segment (F2) serially connected in flow communication to the radially outer flow path segment (F1) and having an air outlet (110) for discharging air extracted from the air-oil mixture received from the radially outer flow path segment (F1);
a porous separator matrix (114) disposed in both the radially outer flow path segment (F1) and the radially inner flow path segment (F2); and
oil collector tubes (140) projecting radially outwardly from the annular separation plate (120) into the radially outer flow path segment (F1) towards the oil outlet (108), the oil collector tubes (140) having respective oil inlets (140a) defined at a radially inner surface of the annular separation plate (120),
**characterised in that**:
a radially inner diameter of the annular separation plate (120) gradually decreases in an axial direction away from the first end wall (102c); and
the radially inner diameter varies from a minimum value to a maximum value, and the oil collector tubes (140) are located at an axial location along the annular separation plate (120) where the radially inner diameter has a value greater than the minimum value.

2. The air-oil separator (100) according to claim 1, wherein the oil collector tubes (140) are disposed at an axial location where the radially inner diameter of the annular separation plate (120) is at its maximum value.

3. The air-oil separator (100) according to claim 1 or 2, wherein the axial location is adjacent to the first end wall (102c).

4. The air-oil separator (100) according to any preceding claim, wherein the annular separation plate (120) curves radially inwardly in an axial direction away from the first end wall (102c).

5. The air-oil separator (100) according to any preceding claim, wherein the annular separation plate (120) has an axial length (L1) which is less than that of the annular chamber (L2).

6. The air-oil separator (100) according to any preceding claim, wherein the oil collector tubes (140) include a circumferential array of oil collector tubes (140) axially adjacent to the first end wall (102c) of the housing (102).

7. The air-oil separator (100) according to any preceding claim, wherein the oil collector tubes (140) extend radially into the radially outer flow path segment (F1) to a radial location contained in a radially outer half of the radially outer flow path segment (F1).

8. The air-oil separator (100) according to any preceding claim, wherein the oil collector tubes (140) are embedded in the porous separator matrix (114) and in flow communication therewith.

9. The air-oil separator (100) according to any preceding claim, wherein the porous separator matrix (114) includes a metal foam material.

10. The air-oil separator (100) according to any preceding claim, wherein the air outlet (110) of the radially outer flow path segment (F1) is located axially adjacent to the first end wall (102c) of the housing (102), and the air outlet (110) is defined in the inner circumferential wall (102b) of the housing (102).

## Patentansprüche

1. Luft-Öl-Separator (100) für ein Luftfahrzeugtriebwerk (10), wobei der Luft-Öl-Separator (100) Folgendes umfasst:
ein um eine Mittelachse drehbares Gehäuse (102), wobei das Gehäuse (102) eine äußere und eine innere Umfangswand aufweist (102a, 102b), die sich axial von einer ersten Stirnwand (102c) zu einer zweiten Stirnwand (102d) erstrecken, wobei die äußere und die innere Umfangswand (102a, 102b) und die erste und die zweite Stirnwand (102c, 102d) eine ringförmige Kammer (102e) um die Mittelachse herum definieren, wobei die ringförmige Kammer (102e) einen in der ersten Stirnwand (102c) definierten Einlass (106) zum Aufnehmen eines Luft-Öl-Gemisches und einen in der äußeren Umfangswand (102a) definierten Ölauslass (108) aufweist;
eine ringförmige Separationsplatte (120), die sich innerhalb der ringförmigen Kammer (102e) axial von der ersten Stirnwand (102c) in Richtung der zweiten Stirnwand (102d) vom Einlass (106) aus radial nach innen relativ zur Mittelachse erstreckt, wobei die ringförmige Separationsplatte (120) die ringförmige Kammer (102e) in ein radial äußeres Strömungswegsegment (F1) und ein radial inneres Strömungswegsegment (F2) unterteilt, wobei das radial innere Strömungswegsegment (F2) in Strömungsverbindung mit dem radial äußeren Strömungswegsegment (F1) in Reihe verbunden ist und einen Luftauslass (110) zum Abführen von Luft aufweist, die aus dem vom radial äußeren Strömungswegsegment (F1) empfangenen Luft-Öl-Gemisch extrahiert wurde;
eine poröse Separatormatrix (114), die sowohl im radial äußeren Strömungswegsegment (F1) als auch im radial inneren Strömungswegsegment (F2) angeordnet ist; und
Ölsammelrohre (140), die von der ringförmigen Separationsplatte (120) radial nach außen in das radial äußere Strömungswegsegment (F1) in Richtung des Ölauslasses (108) ragen, wobei die Ölsammelrohre (140) jeweils Öleinlässe (140a) aufweisen, die an einer radial inneren Oberfläche der ringförmigen Separationsplatte (120) definiert sind,
**dadurch gekennzeichnet, dass**:
der radial innere Durchmesser der ringförmigen Separationsplatte (120) in axialer Richtung von der ersten Stirnwand (102c) weg allmählich abnimmt; und
der radial innere Durchmesser von einem Mindestwert zu einem Höchstwert variiert und die Ölsammelrohre (140) sich an einer axialen Stelle entlang der ringförmigen Separationsplatte (120) befinden, an der der radial innere Durchmesser einen Wert aufweist, der größer ist als der Mindestwert.

2. Luft-Öl-Separator (100) nach Anspruch 1, wobei die Ölsammelrohre (140) an einer axialen Stelle angeordnet sind, an der der radial innere Durchmesser der ringförmigen Separationsplatte (120) seinen Maximalwert erreicht.

3. Luft-Öl-Separator (100) nach Anspruch 1 oder 2, wobei die axiale Stelle benachbart zur ersten Stirnwand (102c) liegt.

4. Luft-Öl-Separator (100) nach einem der vorstehenden Ansprüche, wobei sich die ringförmige Separationsplatte (120) in axialer Richtung von der ersten Stirnwand (102c) weg radial nach innen wölbt.

5. Luft-Öl-Separator (100) nach einem der vorstehenden Ansprüche, wobei die ringförmige Separationsplatte (120) eine axiale Länge (L1) aufweist, die kleiner ist als die der ringförmigen Kammer (L2).

6. Luft-Öl-Separator (100) nach einem der vorstehenden Ansprüche, wobei die Ölsammelrohre (140) eine umlaufende Anordnung von Ölsammelrohren (140) beinhalten, die axial benachbart zur ersten Stirnwand (102c) des Gehäuses (102) liegen.

7. Luft-Öl-Separator (100) nach einem der vorstehenden Ansprüche, wobei sich die Ölsammelrohre (140) radial in das radial äußere Strömungswegsegment (F1) zu einer radialen Stelle erstrecken, die in einer radial äußeren Hälfte des radial äußeren Strömungswegsegments (F1) enthalten ist.

8. Luft-Öl-Separator (100) nach einem der vorstehenden Ansprüche, wobei die Ölsammelrohre (140) in die poröse Separatormatrix (114) eingebettet sind und mit dieser in Strömungsverbindung stehen.

9. Luft-Öl-Separator (100) nach einem der vorstehenden Ansprüche, wobei die poröse Separatormatrix (114) ein Metallschaummaterial beinhaltet.

10. Luft-Öl-Separator (100) nach einem der vorstehenden Ansprüche, wobei sich der Luftauslass (110) des radial äußeren Strömungswegsegments (F1) axial benachbart zur ersten Stirnwand (102c) des Gehäuses (102) befindet und der Luftauslass (110) in der inneren Umfangswand (102b) des Gehäuses (102) definiert ist.

## Revendications

1. Séparateur air-huile (100) pour un moteur d'aéronef (10), le séparateur air-huile (100) comprenant :
un boîtier (102) rotatif autour d'un axe central, le boîtier (102) présentant une paroi circonférentielle extérieure et une paroi circonférentielle intérieure (102a, 102b) s'étendant axialement d'une première paroi d'extrémité (102c) à une deuxième paroi d'extrémité (102d), les parois circonférentielles extérieure et intérieure (102a, 102b) et les première et deuxième parois d'extrémité (102c, 102d) définissant une chambre annulaire (102e) autour de l'axe central, la chambre annulaire (102e) présentant une entrée (106) définie dans la première paroi d'extrémité (102c) pour recevoir un mélange air-huile, et une sortie d'huile (108) définie dans la paroi circonférentielle extérieure (102a) ;
une plaque de séparation annulaire (120) faisant saillie axialement de la première paroi d'extrémité (102c) vers la deuxième paroi d'extrémité (102d) à l'intérieur de la chambre annulaire (102e) radialement vers l'intérieur à partir de l'entrée (106) par rapport à l'axe central, la plaque de séparation annulaire (120) divisant la chambre annulaire (102e) en un segment de chemin d'écoulement radialement extérieur (F1) et un segment de chemin d'écoulement radialement intérieur (F2), le segment de chemin d'écoulement radialement intérieur (F2) connecté en série en communication d'écoulement au segment de chemin d'écoulement radialement extérieur (F1) et présentant une sortie d'air (110) pour évacuer l'air extrait du mélange air-huile reçu du segment de chemin d'écoulement radialement extérieur (F1) ;
une matrice de séparateur poreuse (114) disposée à la fois dans le segment de chemin d'écoulement radialement extérieur (F1) et dans le segment de chemin d'écoulement radialement intérieur (F2) ; et
des tubes collecteurs d'huile (140) faisant saillie radialement vers l'extérieur à partir de la plaque de séparation annulaire (120) dans le segment de chemin d'écoulement radialement extérieur (F1) vers la sortie d'huile (108), les tubes collecteurs d'huile (140) présentant des entrées d'huile (140a) respectives définies sur une surface radialement intérieure de la plaque de séparation annulaire (120),
**caractérisé en ce que** :
le diamètre radialement intérieur de la plaque de séparation annulaire (120) diminue progressivement dans une direction axiale s'éloignant de la première paroi d'extrémité (102c) ; et
le diamètre radialement intérieur varie d'une valeur minimale à une valeur maximale, et les tubes collecteurs d'huile (140) sont situés à un emplacement axial le long de la plaque de séparation annulaire (120) où le diamètre radialement intérieur présente une valeur supérieure à la valeur minimale.

2. Séparateur air-huile (100) selon la revendication 1, dans lequel les tubes collecteurs d'huile (140) sont disposés à un emplacement axial où le diamètre radialement intérieur de la plaque de séparation annulaire (120) est à sa valeur maximale.

3. Séparateur air-huile (100) selon la revendication 1 ou 2, dans lequel l'emplacement axial est adjacent à la première paroi d'extrémité (102c).

4. Séparateur air-huile (100) selon l'une quelconque des revendications précédentes, dans lequel la plaque de séparation annulaire (120) est courbée radialement vers l'intérieur dans une direction axiale s'éloignant de la première paroi d'extrémité (102c).

5. Séparateur air-huile (100) selon l'une quelconque des revendications précédentes, dans lequel la plaque de séparation annulaire (120) présente une longueur axiale (L1) qui est inférieure à celle de la chambre annulaire (L2).

6. Séparateur air-huile (100) selon l'une quelconque des revendications précédentes, dans lequel les tubes collecteurs d'huile (140) incluent un ensemble circonférentiel de tubes collecteurs d'huile (140) axialement adjacents à la première paroi d'extrémité (102c) du boîtier (102).

7. Séparateur air-huile (100) selon l'une quelconque des revendications précédentes, dans lequel les tubes collecteurs d'huile (140) s'étendent radialement dans le segment de chemin d'écoulement radialement extérieur (F1) jusqu'à un emplacement radial contenu dans une moitié radialement extérieure du segment de chemin d'écoulement radialement extérieur (F1).

8. Séparateur air-huile (100) selon l'une quelconque des revendications précédentes, dans lequel les tubes collecteurs d'huile (140) sont intégrés dans la matrice de séparateur poreuse (114) et en communication d'écoulement avec celle-ci.

9. Séparateur air-huile (100) selon l'une quelconque des revendications précédentes, dans lequel la matrice de séparateur poreuse (114) comprend un matériau alvéolaire métallique.

10. Séparateur air-huile (100) selon l'une quelconque des revendications précédentes, dans lequel la sortie d'air (110) du segment de chemin d'écoulement radialement extérieur (F1) est située axialement adjacente à la première paroi d'extrémité (102c) du boîtier (102), et la sortie d'air (110) est définie dans la paroi circonférentielle intérieure (102b) du boîtier (102).
